# EUROPÄISCHE PATENTANMELDUNG

(11) **EP 0 623 501 A2**
(43) Veröffentlichungstag der Anmeldung: **09.11.1994**
(21) Anmeldenummer: 94106798.5
(22) Anmeldetag: 30.04.1994
(51) Int. Cl.: B62D 21/00

(54) **Träger für Fahrzeugrahmen**

(30) Priorität: 03.05.1993 DE 9306633 U
(71) Anmelder: BPW FAHRZEUGTECHNIK GmbH & CO. KG, D-33104 Paderborn (DE)
(72) Erfinder: Bröckling, Martin, D-33161 Hövelhof (DE)
(74) Vertreter: Stenger, Watzke & Ring Patentanwälte

(57) **Zusammenfassung**

Die Erfindung betrifft einen Träger (1) für Fahrzeugrahmen, insbesondere als Längsträger und Zuggabelholm, mit C-förmigem Profil, dessen senkrechter Steg (3) von den Enden zum höchstbelasteten Querschnitt des Trägers (1) kontinuierlich zunimmt und der im Bereich seines durch einen Profilschenkel (5) gebildeten Untergurtes verschweißt ist. Um einen zur Verwendung bei Fahrzeugrahmen bestimmten Träger (1) der eingangs beschriebenen Art derart weiterzubilden, daß trotz der Verschweißung im Untergurt keine Überdimensionierung des Trägers (1) aufgrund des Schweißfaktors erfolgen muß, wird mit der Erfindung vorgeschlagen, daß die Teile (5a, 5b) des unteren Profilschenkels (5) über eine V-förmige Einlage (6) miteinander verschweißt sind.

## Beschreibung

Die Erfindung betrifft einen Träger für Fahrzeugrahmen, insbesondere als Längsträger oder Zuggabelholm, mit C-förmigem Profil, dessen senkrechter Steg von den Enden zum höchst belasteten Querschnitt des Trägers kontinuierlich zunimmt und der im Bereich seines durch einen Profilschenkel gebildeten Untergurtes verschweißt ist.

Als Längsträger oder Zuggabelholm für fahrzeugrahmen verwendete Träger der voranstehend beschriebenen Art sind bekannt. Sie werden durch Abkanten eines Zuschnittes als sogenannte "Fischbauchträger" mit C-förmigem Querschnittsprofil hergestellt, wobei an der Stelle der größten Stegbreite die Teile des den Untergurt bildenden Profilschenkels stumpf miteinander verschweißt werden.

Durch die Verschweißung der beiden Schenkelteile mittels einer Stumpfschweißnaht im Bereich des Untergurtes ergibt sich im höchstbelasteten Querschnitt in dem auf Zug beanspruchten Untergurt eine Schwächung, die zu einer Reduzierung der zulässigen Belastbarkeit des Trägers führt. Aufgrund des sogenannten Schweißfaktors muß somit bei der bekannten Konstruktion der Träger insgesamt überdimensioniert werden, um die durch die Verschweißung erfolgte Schwächung auszugleichen. Dies führt zu einem höheren Material- und Fertigungsaufwand.

Der Erfindung liegt die **Aufgabe** zugrunde, einen zur Verwendung bei Fahrzeugrahmen bestimmten Träger der eingangs beschriebenen Art derart weiterzubilden, daß trotz der Verschweißung im Untergurt keine Überdimensionierung des Trägers aufgrund des Schweißfaktors erfolgen muß.

Die **Lösung** dieser Aufgabenstellung durch die Erfindung ist dadurch gekennzeichnet, daß die Teile des unteren Profilschenkels über eine V-förmige Einlage miteinander verschweißt sind.

Durch die erfindungsgemäße Ausbildung des geschweißten Trägers ergibt sich der Vorteil, daß im Untergurt keine Schweißnaht innerhalb des höchstbelasteten Querschnittes liegt, weil durch die V-förmige Einlage die Schweißnähte außerhalb des höchstbelasteten Querschnittes verlaufen und deshalb nicht zu einer Reduzierung der zulässigen Belastbarkeit infolge eines zu berücksichtigenden Schweißfaktors führen. Es ist somit nicht erforderlich, daß der erfindungsgemäße Träger insgesamt überdimensioniert wird, so daß die bisherige Vergrößerung des Materialaufwandes und damit des Trägergewichtes entfällt.

Gemäß einem weiteren Merkmal der Erfindung bleibt die V-förmige Einlage im Scheitelpunkt unverschweißt.

Bei einer bevorzugten Ausführungsform der Erfindung können die abgewinkelten Schenkel im Bereich des höchstbelasteten Querschnittes durch ein parallel zum Steg verlaufendes Stegblech verbunden werden, das dem erfindungsgemäßen Träger eine erhöhte Steifigkeit verleiht. Um Gewicht einzusparen, kann das Stegblech gemäß einem weiteren Merkmal der Erfindung seitlich mit V-förmigen Aussparungen ausgeführt sein.

Auf der Zeichnung sind zwei Ausführungsbeispiele des erfindungsgemäßen Trägers dargestellt, und zwar zeigen:
- Fig. 1: eine Seitenansicht eines Fahrzeugrahmens,
- Fig. 2: eine Draufsicht auf den Fahrzeugrahmen nach Fig. 1,
- Fig. 3: eine vergrößert dargestellte Ansicht von innen des mittleren Teiles eines der beiden Träger nach den Fig. 1 und 2,
- Fig. 4: einen Querschnitt durch den Träger gemäß der Schnittlinie IV-IV in Fig. 3,
- Fig. 5: einen weiteren Querschnitt gemäß der Schnittlinie V-V in Fig. 3 und
- Fig. 6: eine Draufsicht auf den Träger nach den Fig. 3 und 4 mit einem Teilschnitt im mittleren Bereich;
- Fig. 7: eine der Fig. 3 entsprechende Ansicht eines zweiten Ausführungsbeispiels mit eingeschweißtem Stegblech und
- Fig. 8: einen Querschnitt gemäß der Schnittlinie VIII-VIII in Fig. 7.

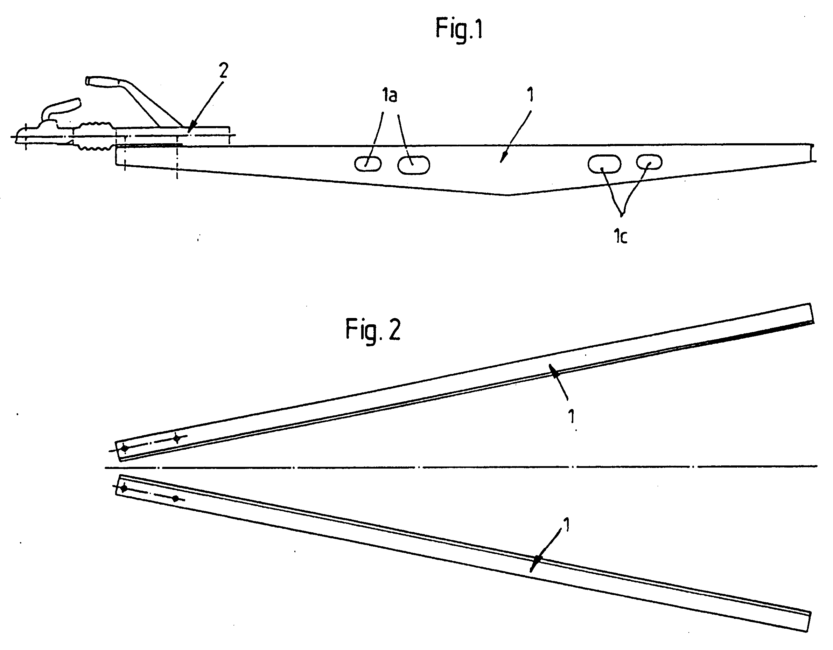

Der für einen einachsigen Anhänger, beispielsweise einen Pferde- oder Bootsanhänger oder einen Caravan bestimmte Fahrzeugrahmen gemäß den Fig. 1 und 2 besteht aus zwei V-förmig angeordneten Trägern 1, die an ihrem vorderen, nahe beieinander liegenden Ende mit einer Zugvorrichtung 2 versehen sind.

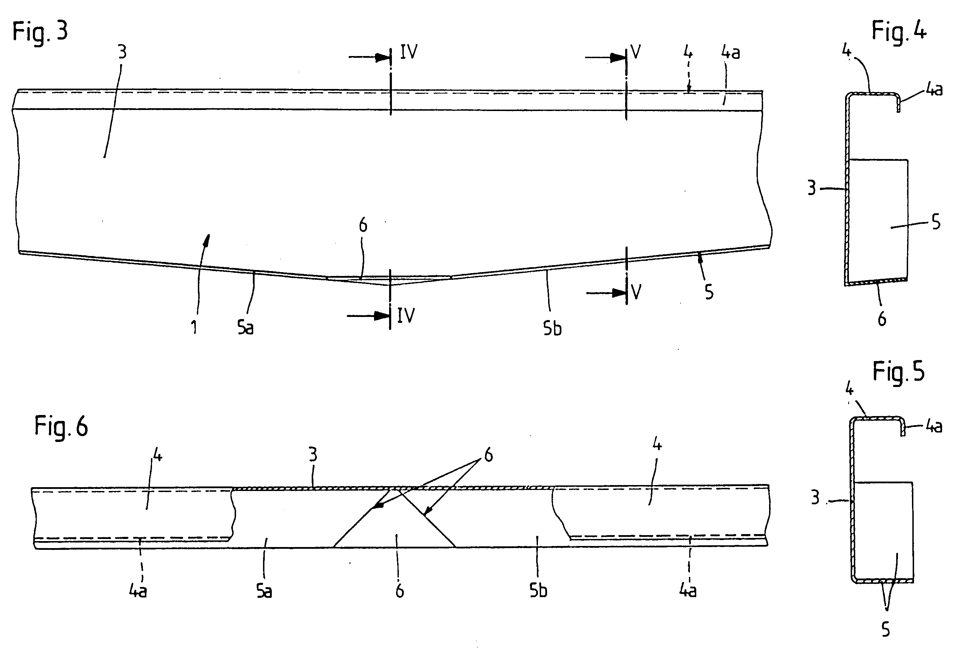

Jeder der beiden Träger 1 weist ein C-förmiges Profil auf, das gemäß Fig. 5 einen senkrecht stehenden Steg 3 umfaßt, an dessen oberen Rand sich ein rechtwinklig abgewinkelter Schenkel 4 mit einem wiederum unter einem rechten Winkel abgewinkelten Flansch 4a und an dessen unteren Rand sich ein rechtwinklig abgewinkelter Schenkel 5 anschließt. Der mit dem abgewinkelten Flansch 4a versehene Schenkel 4 bildet hierbei den Obergurt, der Schenkel 5 den Untergurt des Trägers. Aus der Seitenansicht in Fig. 3 und auch aus Fig. 1 geht hervor, daß sich die Höhe des Steges 3 von den außenliegenden Enden zur Mitte hin kontinuierlich vergrößert, so daß ein "Fischbauchträger" gebildet wird.

Wegen der zur Mitte hin zunehmenden Höhe des Steges 3 hat der Zuschnitt, aus dem der Träger 1 durch Abkanten der Schenkel 4 und 5 hergestellt wird, im Bereich des Schenkels 5 einen V-förmigen Einschnitt, so daß der Schenkel 5 aus Teilen 5a und 5b besteht, die miteinander verschweißt werden.

Im Bereich des durch Zugkräfte belasteten, den Untergurt bildenden Schenkels 5 erfolgt jedoch keine unmittelbare Verbindung zwischen den Teilen 5a und 5b, sondern eine mittelbare Verbindung durch Verwendung einer V-förmigen Einlage 6, die ihrerseits über Stumpfschweißnähte 6a mit den Teilen 5a bzw. 5b verschweißt ist. Im Scheitelpunkt ist die V-förmige Einlage 6 unverschweißt, so daß im höchstbelasteten Querschnitt des Trägers 1 keine Schweißnaht verläuft, die die zulässige Belastbarkeit des Trägers 1 herabsetzt. Der Träger 1 kann demzufolge mit dem auf den jeweiligen Belastungsfall abgestimmten Querschnitt hergestellt werden, ohne daß aufgrund eines zu berücksichtigenden Schweißfaktors ein höherer Materialaufwand betrieben werden muß, der zusätzlich zu einem höheren Gewicht führen würde.

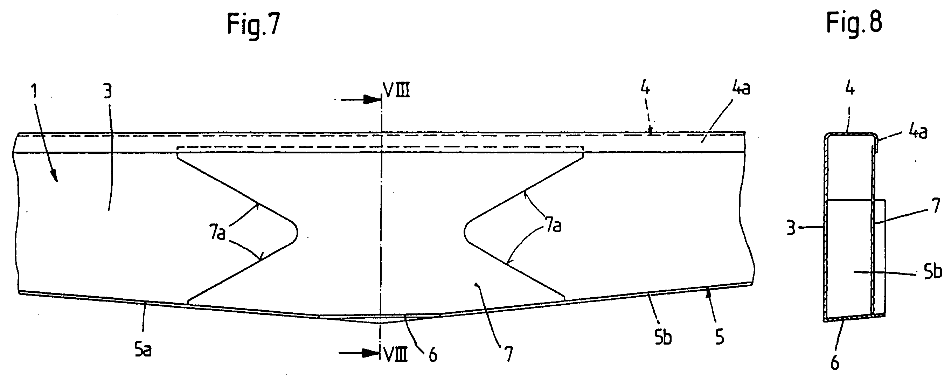

Bei dem auf der Zeichnung in den Fig. 7 bis 8 dargestellten Ausführungsbeispiel sind die Schenkel 4 und 5 des Trägers 1 zusätzlich durch ein Stegblech 7 miteinander verbunden. Dieses Stegblech 7 ist an seinem oberen Rand auf der Innenseite des abgewinkelten Flansches 4a des Schenkels 4 angeschweißt. Der untere Rand des Stegbleches 7 ist mit der Innenfläche des Schenkels 5 verschweißt, der aufgrund seiner größeren Länge seitlich über den oberen Schenkel 4 hinausragt, wie aus der Fig. 8 am besten zu erkennen ist. Um auch hinsichtlich des Stegbleches 7 unnötiges Gewicht zu vermeiden, ist das Stegblech 7 beim Ausführungsbeispiel mit seitlichen V-förmigen Aussparungen 7a ausgeführt. Außerhalb des höchstbelasteten Querschnittes kann auch der Träger 1 im Bereich seines Steges 3 mit langlochartigen Aussparungen 1a versehen sein, wie aus Fig. 1 hervorgeht.

### Bezugszeichenliste:

- 1: Träger
- 1a: Aussparung
- 2: Zugvorrichtung
- 3: Steg
- 4: Schenkel
- 4a: Flansch
- 5: Schenkel
- 5a: Teil
- 5b: Teil
- 6: Einlage
- 6a: Stumpfschweißnaht
- 7: Steg
- 7a: Aussparung

## Patentansprüche

1. Träger für Fahrzeugrahmen, insbesondere als Längsträger und Zuggabelholm, mit C-förmigem Profil, dessen senkrechter Steg (3) von den Enden zum höchstbelasteten Querschnitt des Trägers (1) kontinuierlich zunimmt und der im Bereich seines durch einen Profilschenkel (5) gebildeten Untergurtes verschweißt ist,
**dadurch gekennzeichnet,**
daß die Teile (5a, 5b) des unteren Profilschenkels (5) über eine V-förmige Einlage (6) miteinander verschweißt sind.

2. Träger nach Anspruch 1, dadurch gekennzeichnet, daß die V-förmige Einlage (6) im Scheitelpunkt unverschweißt ist.

3. Träger nach Anspruch 1 oder 2, dadurch gekennzeichnet, daß die abgewinkelten Schenkel (4, 5) im Bereich des höchstbelasteten Querschnitts durch ein parallel zum Steg (3) verlaufendes Stegblech (7) verbunden sind.

4. Träger nach Anspruch 3, dadurch gekennzeichnet, daß das Stegblech (7) seitlich mit V-förmigen Aussparungen (7a) ausgeführt ist.
